# EUROPEAN PATENT APPLICATION

(11) **EP 2 865 501 A1**
(43) Date of publication of application: **29.04.2015**
(21) Application number: 13835238.0
(22) Date of filing: 06.09.2013
(51) Int. Cl.: B27N 3/28, B27N 1/02, B27N 3/02, C08L 97/02

(54) **WOOD POLYMER/PLASTIC COMPOSITE MATERIAL HAVING TRANSPARENT SURFACE LAYER**

(30) Priority: 06.09.2012 KR 20120098597
(71) Applicant: LG Hausys, Ltd., Seoul 150-721 (KR)
(72) Inventor: JOUNG, Jae Youl, Daejeon 301-812 (KR)
(74) Representative: Goddar, Heinz J.
(86) International application number: PCT/KR2013/008049
(87) International publication number: WO 2014/038880

(57) **Abstract**

The present invention relates to a wood polymer/plastic composite material having a transparent surface layer which can enhance physical properties of a product by additionally providing the transparent surface layer on the outer surface of the wood polymer/plastic composite material through an application of a multi-extrusion process. To this end, the present invention includes: an inner layer (11) manufactured by using a compound in which one or a plurality of wood flour, wood chips, and long fiber, which are main materials, are selectively introduced and mixed; and a surface layer (12) formed on the outer surface of the inner layer (11). According to the present invention, the physical properties of the product can be enhanced by additionally providing the transparent surface layer on the outer surface of the wood polymer/plastic composite material through an application of the multi-extrusion process, and the advantages of preventing slipping, surface scratches, and pollution can be provided.

## Description

### [Technical Field]

The present invention relates to a wood polymer/plastic composite material, and more particularly, to a wood polymer/plastic composite material having a transparent surface layer which can enhance physical properties of a product by additionally providing the transparent surface layer on the outer surface of an inner layer through a multi-extrusion process.

### [Background Art]

Generally, wood is widely used as a natural material, but it is weak to water and cracked or even broken after time has passed, which undesirably causes a high maintenance cost. So as to solve the above-mentioned disadvantage, wood polymer/plastic composites (WPC) have been developed and proposed.

The wood polymer/plastic composites do not have any decoloring, cracking and breakage occurring disadvantageously on general wood. Unlike natural wood, especially, they are strong on water, and even in case where they are used for the purpose of an exterior material, they are not easily rotten. Accordingly, natural wood and preserved wood are replaced with the wood polymer/plastic composites, and further, the market scale of the wood polymer/plastic composites has been gradually increased. The wood polymer/plastic composites are manufactured through injection molding or extrusion molding.

A polyolefin such as polyethylene (PE), polypropylene (PP) and the like is used as a plastic material used for the injection molding or extrusion molding, and since the polyolefin does not have any toxicity, it is appropriate for the wood polymer/plastic composites as eco-friendly materials. The injection molded product is engraved or formed with wood patterns upon the molding, and accordingly, the texture of wood can be formed, without having any secondary process like printing or coating.

An extrusion molded product becomes a flat panel and a square material, which is generally used for construction materials.

Generally, the wood polymer/plastic composites advantageously have lower water absorption than the natural wood and are not rotten. Further, the wood polymer/plastic composites have a relatively low foaming magnitude and form a high density surface layer on the outer surface thereof, and accordingly, they have a substantially high strength so that nailing or smoothing can be conducted.

The wood polymer/plastic composites have excellent physical properties and are also eco-friendly and recyclable, so that they are widely used as new materials replacing natural wood, and accordingly, a variety of wood polymer/plastic composite products have been developed.

However, there is a need for the improvement of the physical properties of the products through the reinforcement of the outer surfaces of the polymer/plastic composites so as to prevent slipping and surface scratches and provide a pollution prevention function.

### [Disclosure]

### [Technical Problem]

Accordingly, the present invention has been made in view of the above-mentioned problems occurring in the prior art, and it is an object of the present invention to provide a wood polymer/plastic composite material having a transparent surface layer that can enhance physical properties of a product by additionally providing the transparent surface layer on the outer surface of the wood polymer/plastic composite material through a multi-extrusion process.

### [Technical Solution]

To accomplish the above-mentioned object, according to the present invention, there is provided a wood polymer/plastic composite material including: an inner layer manufactured by using a gel type compound in which one or more selected from wood flour, wood flakes, and long fibers, as main materials, are mixed with polymer resin; and a surface layer transparently formed on the outer surface of the inner layer.

According to the present invention, preferably, the compound includes 10 to 90 parts by weight of the main materials and 10 to 50 parts by weight of the polymer resin.

According to the present invention, preferably, the polymer resin includes one or more selected from PP, PE, PVC, ABS, PS, PC and PMMA.

According to the present invention, preferably, the compound selectively includes an additive comprising 0.1 to 50 parts by weight of a compatibilizer, 0.1 to 50 parts by weight of a filler, 0.1 to 30 parts by weight of an antioxidant, 0.1 to 30 parts by weight of a lubricant and 0.1 to 30 parts by weight of a pigment.

According to the present invention, preferably, the long fibers include one or more selected from corn fibers, coconut fibers, palm tree fibers, bamboos, rice straw, natural fibers like cotton, jute, wool, silk and so on, glass fibers, carbon fibers and nylon.

According to the present invention, preferably, the surface layer includes one or more selected from silica sand, silicone, polycarbonate (PC), sodium hydroxide solution, and transparent PP, PE, PVC and ABS.

According to the present invention, preferably, the surface layer is formed through any one of double extrusion, roll coating, immersion, spraying, injection and pressing.

According to the present invention, preferably, the surface layer is formed at a thickness in the range of 0.1 to 100 mm.

According to the present invention, preferably, the surface layer is formed on the top and underside of the inner layer.

### [Advantageous Effects]

According to the present invention, the physical properties of the product can be enhanced by additionally providing the transparent surface layer on the outer surface of the wood polymer/plastic composite material through the multi-extrusion process and advantageously preventing slipping, surface scratches, and pollution.

### [Description of Drawings]

FIG.1 is a side sectional view showing a wood polymer/plastic composite material having a transparent surface layer according to the present invention.
FIG.2 is a side view showing an apparatus for manufacturing the wood polymer/plastic composite material having a transparent surface layer according to the present invention.
FIG.3 is a side sectional view showing the interior of an extrusion die of FIG.2.

### [Mode for Invention]

Hereinafter, an explanation on a configuration and an operation of a wood polymer/plastic composite material having a transparent surface layer according to the present invention will be in detail given with reference to the attached drawings.

In the description, it should be noted that the parts corresponding to those of the drawings are indicated by corresponding reference numerals.

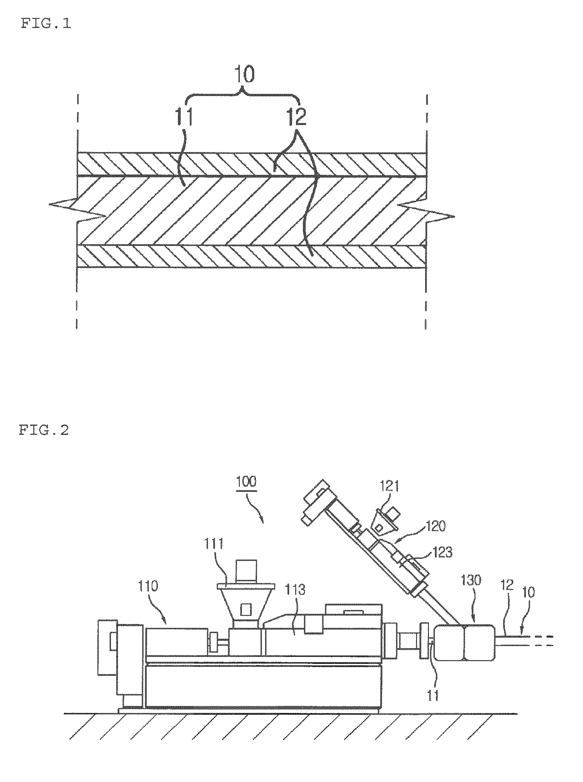

FIG.1 is a side sectional view showing a wood polymer/plastic composite material having a transparent surface layer according to the present invention.

Referring to FIG.1, a wood polymer/plastic composite material 10 according to the present invention includes an inner layer 11 manufactured by using a gel type compound in which one or more selected from wood flour, wood flakes, and long fibers, as main materials, are mixed with polymer resin; and a surface layer 12 transparently formed on the outer surface of the inner layer 11.

Hereinafter, the configuration of the wood polymer/plastic composite material 10 having the transparent surface layer according to the present invention will be in detail explained.

Referring to the inner layer 11, first, the wood flour used as one of main materials of the inner layer 11 is desirably introduced into a drying machine and then heated at a temperature in the range of 80 to 120°C, so that a water content is in the range of 5 to 15 wt%. That is, a long period of time is needed to dry the wood flour at the drying temperature of 80° C or under, and contrarily, drastic drying is carried out at the drying temperature of more than 120° C, thus causing the tense tissues of the wood flour to be undesirably twisted and deformed.

Through the drying process, the water content of the wood flour is in the range of 5 to 15 wt%, and in this case, the wood flour can be gently mixed with other materials, without the addition of any separate binder. If the water content of the wood flour is more than 15 wt%, the moisture in the wood flour may be evaporated upon the manufacturing of the wood polymer/plastic composite material 10, thus generating bubbles and weakening the bonding force with polymer resin as will be discussed later upon the mixing with the polymer resin. Accordingly, bad products may be undesirably provided.

In addition to the wood flour, further, wood flakes and long fibers are contained into the compound. In this case, the wood flakes are desirably cut to a length in the range of 0.5 to 18 cm. That is, if the wood flakes are cut to a length of 0.5 cm or under, there is little difference between the physical properties such as compression and shock strengths exerted when the wood flour is used as a main material and when the wood flakes are additionally contained. Contrarily, if the wood flakes are cut to a length of more than 18 cm, it is difficult in conducting the mixing and molding processes of the wood flakes and a rubber material.

More preferably, the wood flakes are cut to a length in the range of 3 to 8 cm, and in this case, the physical properties such as compression and shock strengths can be improved and the mixing and molding with other materials can be much more easily conducted.

Further, the long fibers are desirably cut to a length in the range of 0.5 to 18 cm. That is, if the long fibers are cut to a length of 0.5 cm or under, there is little difference between the physical properties such as compression and shock strengths exerted when the wood flour is used as a main material and when the long fibers are additionally contained. Contrarily, if the long fibers are cut to a length of more than 18 cm, it is difficult in conducting the mixing and molding processes of the wood flakes and the rubber material. Upon the extrusion molding of the wood polymer/plastic composite material 10, however, if the long fibers are molded in parallel relation with the longitudinal direction of the wood polymer/plastic composite material 10, they can be molded, without any limitation in their length.

In this case, desirably, the long fibers include one or more selected from corn fibers, coconut fibers, palm tree fibers, bamboos, rice straw, natural fibers like cotton, jute, wool, silk and so on, reinforced polymer fibers like glass fibers, carbon fibers, nylon and so on, and steel wires.

In this case, the lower the water contents of the wood flakes and the long fibers are, the better the moldability of the wood polymer/plastic composite material 10 is. In the same manner as mentioned above, for example, the wood flakes and the long fibers are subjected to drying through which they have the water contents in the range of 5 to 15 wt%.

After the cutting and drying processes, the main materials are mixed with the polymer resin and an additive to form a compound. In this case, preferably, the compound is made by selectively putting one or more selected from wood flour, wood flakes and long fibers, 10 to 50 parts by weight of polymer resin, and an additive comprising 0.1 to 50 parts by weight of a compatibilizer, 0.1 to 50 parts by weight of a filler, 0.1 to 30 parts by weight of an antioxidant, 0.1 to 30 parts by weight of a lubricant and 0.1 to 30 parts by weight of a pigment into a mixing machine and by mixing them for a given period of time. More preferably, the compound comprises 50 to 80 parts by weight of one or more selected from wood flour, wood flakes and long fibers, 10 to 40 parts by weight of polymer resin, and less than 10 parts by weight of the additive.

In this case, the polymer resin comprises one or more selected from PP, PE, PVC, ABS, PS, PC and PMMA.

After the compound has been made, the inner layer 11 of the wood polymer/plastic composite material 10 is made through given molding. In this case, the inner layer 11 is desirably molded by means of extrusion, but it may be of course made by means of injection molding or pressing.

The surface layer 12 is formed by applying a transparent extrusion material to the outer surface of the inner layer 11. In this case, preferably, the surface layer 12 is formed through the application of the extrusion material made by mixing one or more selected from silica sand, silicone, polycarbonate (PC), sodium hydroxide solution, and transparent PP, PE, PVC and ABS to the outer surface of the inner layer 11.

In this case, the surface layer 12 is formed through any one of double extrusion, roll coating, immersion, spraying, injection and pressing, and preferably, the surface layer 12 is formed at a thickness in the range of 0.1 to 100 mm. That is, the thickness of the surface layer 12 determines a degree of contacting force with the inner layer 11. Further, the generation of bubbles and the reduction of transparency upon the molding of the surface layer 12 may be caused in accordance with the selection and processing conditions of materials and the thickness of the surface layer 12. If the thickness of the surface layer 12 is more than 100 mm, the generation of bubbles and the reduction of transparency are caused on the surface layer 12, and therefore, the thickness of the surface layer 12 should be desirably less than 100 mm. The wood polymer/plastic composite material 10 desirably includes 3 to 15 parts by weight of the surface layer 12 with respect to 100 parts by weight of the total compound.

Further, the surface layer 12 is desirably formed on the top and underside of the inner layer 11 in such a manner as to be brought into contact with the wood polymer/plastic composite materials 10 arranged in left and right sides upon the construction. Of course, the surface layer 12 may be formed on the top, underside, left and right surfaces of the inner layer 11.

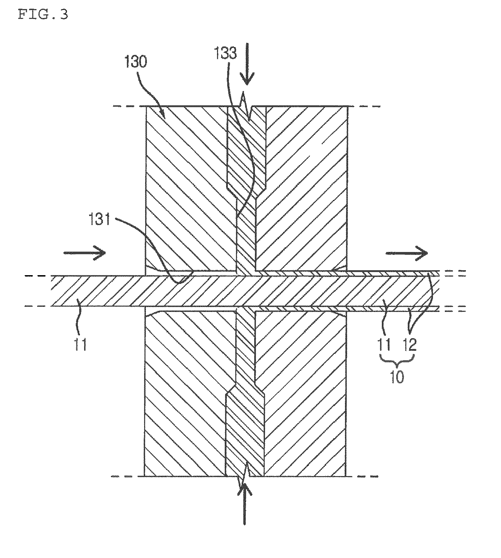

Next, an explanation on the manufacturing process for the wood polymer/plastic composite material 10 according to the present invention will be given with reference to FIGS.2 and 3. In this case, the inner layer 11 and the surface layer 12 are made, for example, through extrusion.

FIG.2 is a side view showing an apparatus for manufacturing the wood polymer/plastic composite material having the transparent surface layer according to the present invention, and FIG.3 is a side sectional view showing the interior of an extrusion die of FIG.2.

First, the compound for making the inner layer 11, which is put into a hopper 11 constituting a main extruder 110, dissolves at the interior of a heating cylinder 113 by means of heating of a heater, and next, the compound is fed to an extrusion head through an extrusion screw to mold the inner layer 11 by means of extrusion.

At the same time, the material for forming the surface layer 12, which is put into a hopper 121 constituting an auxiliary extruder 120, dissolves at the interior of a heating cylinder 123 by means of heating of a heater, and next, the material is fed to an extrusion head through an extrusion screw and then extruded.

The extrusion material for the inner layer 11 extruded through the main extruder 110 is passed through an extrusion hole 131 of an extrusion die 130. Moreover, the extrusion material extruded through the auxiliary extruder 120 is supplied to the outer surface of the inner layer 11 passed through the extrusion hole 131 from a passage 133 formed in the interior of the extrusion die 130 to form the transparent surface layer 12 having a given thickness on the outer surface of the inner layer 11.

Through the above-mentioned processes, the synthetic wood on which wood patterns are formed according to the present invention becomes a product through post-processing such as cooling and cutting.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A wood polymer/plastic composite material comprising:
an inner layer 11 manufactured by using a compound in which one or more selected from wood flour, wood flakes, and long fibers, as main materials, are mixed with polymer resin; and
a surface layer 12 transparently formed on the outer surface of the inner layer 11.

2. The wood polymer/plastic composite material according to claim 1, wherein the compound comprises 10 to 90 parts by weight of the main materials and 10 to 50 parts by weight of the polymer resin.

3. The wood polymer/plastic composite material according to claim 2, wherein the polymer resin comprises one or more selected from PP, PE, PVC, ABS, PS, PC and PMMA.

4. The wood polymer/plastic composite material according to claim 2, wherein the compound selectively comprises an additive comprising 0.1 to 50 parts by weight of a compatibilizer, 0.1 to 50 parts by weight of a filler, 0.1 to 30 parts by weight of an antioxidant, 0.1 to 30 parts by weight of a lubricant and 0.1 to 30 parts by weight of a pigment.

5. The wood polymer/plastic composite material according to claim 1 or 2, wherein the long fibers comprise one or more selected from corn fibers, coconut fibers, palm tree fibers, bamboos, rice straw, natural fibers like cotton, jute, wool, silk and so on, glass fibers, carbon fibers and nylon.

6. The wood polymer/plastic composite material according to claim 1, wherein the surface layer 12 comprises one or more selected from silica sand, silicone, polycarbonate (PC), sodium hydroxide solution, and transparent PP, PE, PVC and ABS.

7. The wood polymer/plastic composite material according to claim 1 or 6, wherein the surface layer 12 is formed through any one of double extrusion, roll coating, immersion, spraying, injection and pressing.

8. The wood polymer/plastic composite material according to claim 7, wherein the surface layer 12 is formed at a thickness in the range of 0.1 to 100 mm.

9. The wood polymer/plastic composite material according to claim 8, wherein the surface layer 12 is formed on the top and underside of the inner layer 11.
